# EUROPEAN PATENT SPECIFICATION

(11) **EP 2 110 532 B1**
(45) Date of publication and mention of the grant of the patent: **27.11.2019**
(21) Application number: 09251076.7
(22) Date of filing: 09.04.2009
(51) Int. Cl.: F02B 75/20, F16F 15/26

(54) **Engine and vehicle including the same**
Motor und Fahrzeug damit
Moteur et véhicule le comportant

(30) Priority: 14.04.2008 JP 2008104247
(43) Date of publication of application: 21.10.2009
(73) Proprietor: Yamaha Hatsudoki Kabushiki Kaisha, Shizuoka-ken Shizuoka 438-8501 (JP)
(72) Inventor: Fujiwara, Hideki, Iwata-shi, Shizuoka-ken 438-8501 (JP)
(74) Representative: Zimmermann, Tankred Klaus

(56) References cited:
- GB-A- 2 088 481
- JP-A- S6 073 154
- JP-A- S60 192 145
- JP-A- 2006 125 257
- JP-A- 2006 250 256

## Description

### Technical Field

The present invention relates to an engine and a vehicle including the same.

### Background

Conventionally, an engine including a so-called two-plane type crankshaft is disclosed in, for example, Japanese Examined Patent Document No. 7-76577. The two-plane type crankshaft includes a first crank pin pair mutually different in phase by 180 degrees and a second crank pin pair different in phase by 90 degrees from the first crank pin pair and mutually different in phase by 180 degrees.

In the case where the crankshaft is formed to be of the two-plane type, it can be made to not substantially cause the primary and the secondary inertia forces and the secondary force couple. Hence, combination of the two-plane type crankshaft and a balancer shaft makes it possible to substantially prevent occurrence of all of the primary and the secondary inertia forces and the primary and the secondary force couples. Such a crankshaft is disclosed by GB 2 088 481 A which is considered to form the closest prior art.

FIG. 13 is a local sectional view of an engine 100 disclosed in Japanese Examined Patent Document No. 7-76577. As shown in FIG. 13, the engine 100 includes a two-plane type crankshaft 101. A balancer shaft 102 for cancelling the primary force couple is disposed frontward of the balancer shaft 101. A gear 101a is provided to the crankshaft 101 in a substantially central portion in the axial direction thereof. The crankshaft 101 is in engagement with the balancer shaft 102 at the gear 101a.

Generally speaking, from the viewpoint of reducing a force exerted on the crankshaft due to resonance of the crankshaft, it is preferable that the rotation speed of the crankshaft at which the resonance thereof reaches the peak is increased. In particular, it is preferable the rotation speed of the crankshaft at which the resonance thereof reaches the peak is increased higher than a normally used range of the rotation speed of the crankshaft.

Here, when the disposition balance of an inertia mass in the crankshaft is taken into account, the rotation speed of the crankshaft at which the resonance thereof reaches the peak tends to be relatively increased in the case where the inertia mass is concentrated on the vicinity of the center of the crankshaft. Hence, also in the crankshaft 101 disclosed in Japanese Examined Patent Document No. 7-76577, the gear 101a is disposed in the substantially central portion of the crankshaft 101 in the direction of the axial line.

However, in the case where the gear for engagement with the balancer shaft is disposed substantially in the center of the crankshaft in the direction of the axial line, the length of the crankshaft tends to be increased. In the case where the length of the crankshaft is increased, the weight of the crankshaft is increased. Hence, a force in a torsional direction being exerted on the crankshaft is rather increased due to torsional resonance of the crankshaft. Hence, there arises the necessity of increasing the diameter of the crankshaft in order to secure the reliability of the crankshaft. As a consequence, the weight of the crankshaft is further increased, and the force in the torsional direction being exerted on the crankshaft due to the torsional resonance of the crankshaft is increased.

In the case where the gear for engagement with the balancer shaft is thus disposed substantially in the center of the crankshaft in the direction of the axial line thereof in consideration of the disposition mass of the inertia mass in the crankshaft, it becomes difficult to implement a weight reduction of the engine while securing high reliability of the engine.

The present invention is made in view of the respects described above, and an object thereof is to implement a weight reduction while securing high reliability in an engine including a two-plane type crankshaft.

### Summary

Viewed from a the first aspect of the present invention can provide a crankshaft. The crankshaft includes a crankshaft body and a first gear. The crankshaft body includes first, second, third, and fourth crank web pairs and first, second, third, and fourth crank pins. The first, second, third, and fourth crank web pairs each include a pair of crank webs. The first, second, third, and fourth crank web pairs are sequentially disposed from one end side to the other end side. The first crank pin interconnects between the pair of crank webs of the first crank web pair. The second crank pin interconnects between the pair of crank webs of the second crank web pair. The second crank pin is different in phase by 90 degrees from the first crank pin. The third crank pin interconnects between the pair of crank webs of the third crank web pair. The third crank pin is different in phase by 180 degrees from the second crank pin. The fourth crank pin interconnects between the pair of crank webs of the fourth crank web pair. The fourth crank pin is different in phase by 180 degrees from the first crank pin.

The first gear is mounted to the crankshaft body. A balancer shaft reduces a primary force couple of the crankshaft. The balancer shaft includes a second gear. The second gear is in engagement with the first gear. The first gear is disposed closer to one end side than the first crank web pair in the direction of the axial line of the crankshaft. A further gear is formed on an outer circumference of the inner crank web of the fourth crank web pair of the crankshaft, the further gear configured to engage with a clutch for connecting the crankshaft to a main shaft of the engine.

Viewed from another aspect, the present invention can provide an engine including a crankshaft and a balancer shaft that reduces a primary force couple. The crankshaft body includes first, second, third, and fourth crank web pairs and first, second, third, and fourth crank pins. The first, second, third, and fourth crank web pairs each include a pair of crank webs. The first crank pin interconnects between the pair of crank webs of the first crank web pair. The second crank pin interconnects between the pair of crank webs of the second crank web pair. The second crank pin is different in phase by 90 degrees from the first crank pin. The third crank pin interconnects between the pair of crank webs of the third crank web pair. The third crank pin is different in phase by 180 degrees from the second crank pin. The fourth crank pin interconnects between the pair of crank webs of the fourth crank web pair. The fourth crank pin is different in phase by 180 degrees from the first crank pin. A gear is formed to an outer crank web, which is one of the crank webs of the first crank web pair and located on one end side in a direction of the axial line of the crankshaft. The balancer shaft includes a second gear for engagement with the outer crank web.

Additional aspects of the present invention can provide a crankshaft and/or a balancer shaft suitable for use in any one of the engines described above.

Further aspects of the present invention can provide a vehicle includes any one of the aspects described above.

Accordingly, a weight reduction can be implemented while securing high reliability in an engine including a two-plane type crankshaft.

### Brief Description of the Drawings

Embodiments of the invention are described below, by way of example only, with reference to the drawings.
FIG. 1 is a left side view of a motorcycle according to an embodiment;
FIG. 2 is a bottom view of an oil pan;
FIG. 3 is a III-III view of FIG. 2;
FIG. 4 is a IV-IV view of FIG. 2;
FIG. 5 is a V-V view of FIG. 2;

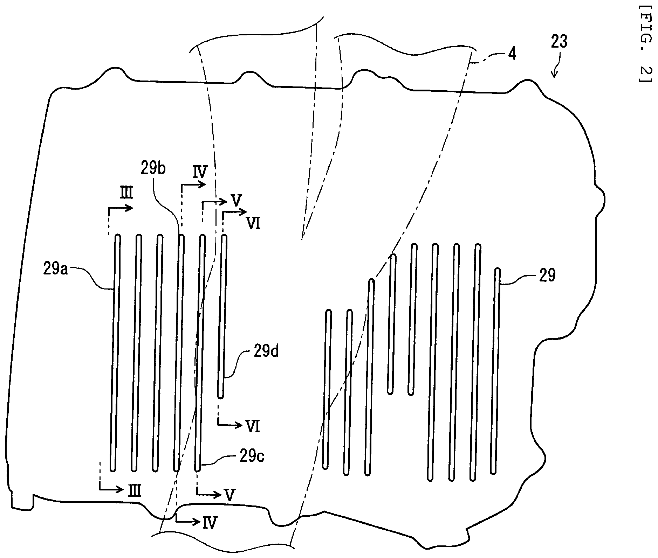

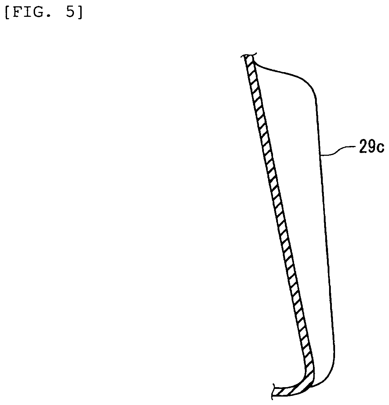

FIG. 5 is a VI-VI view of FIG. 2;

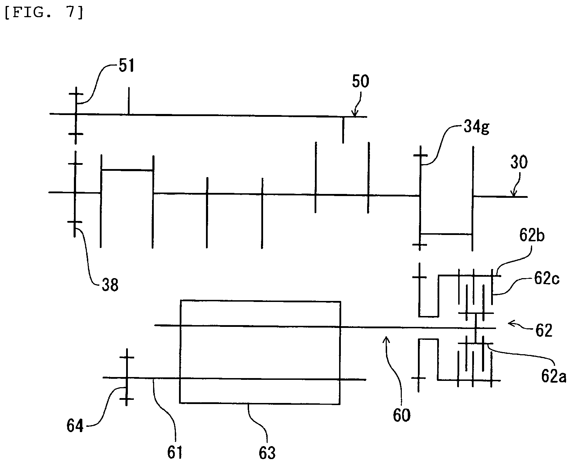

FIG. 7 is a conceptual diagram showing an axis configuration of an engine;

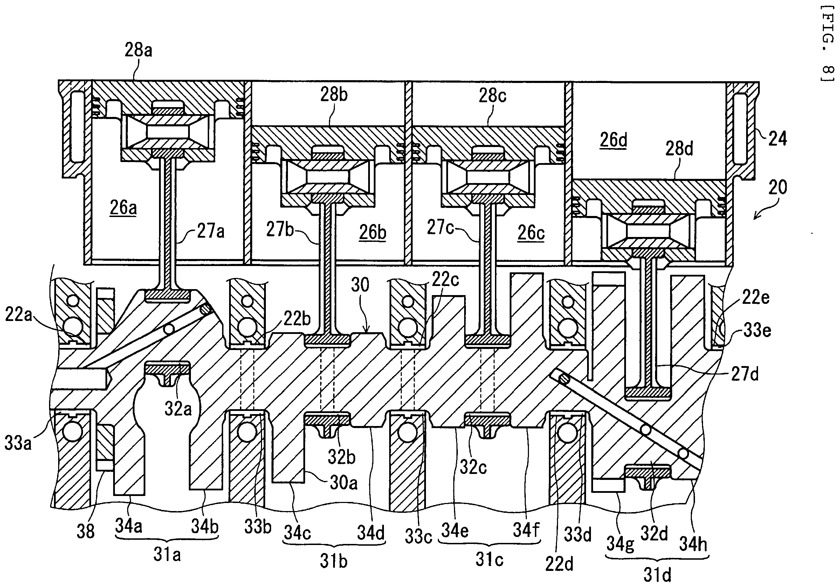

FIG. 8 is a cross-sectional view showing a portion of the engine;

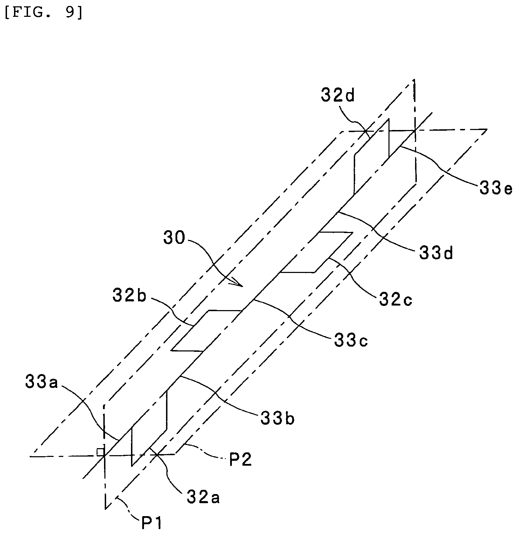

FIG. 9 is schematic perspective view of a crankshaft;

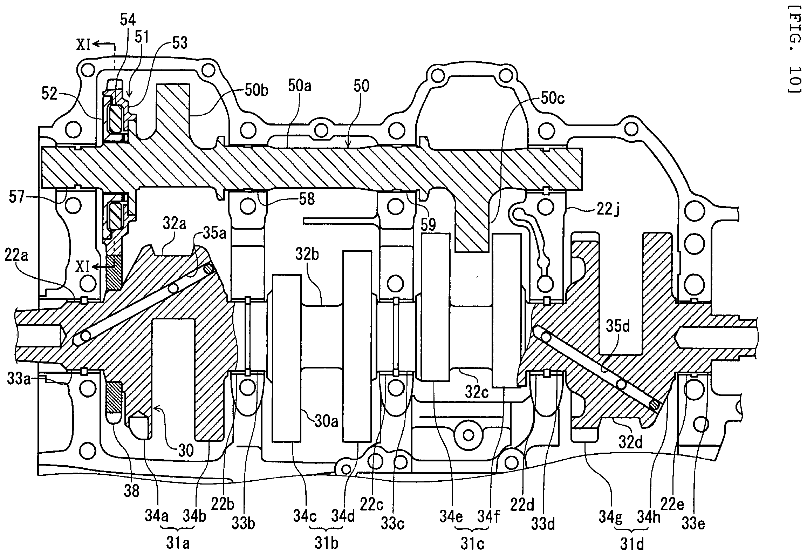

FIG. 10 is a cross-sectional diagram showing a portion of the engine;

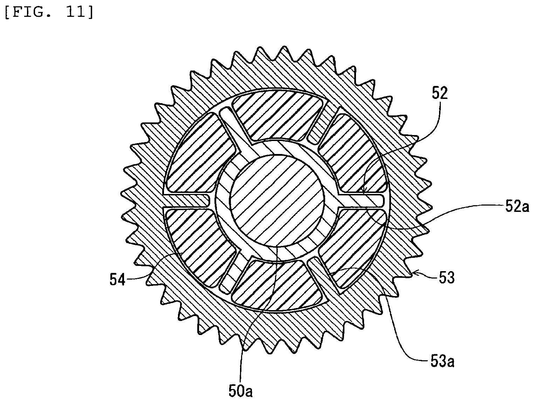

FIG. 11 is a XI-XI view of FIG. 10;

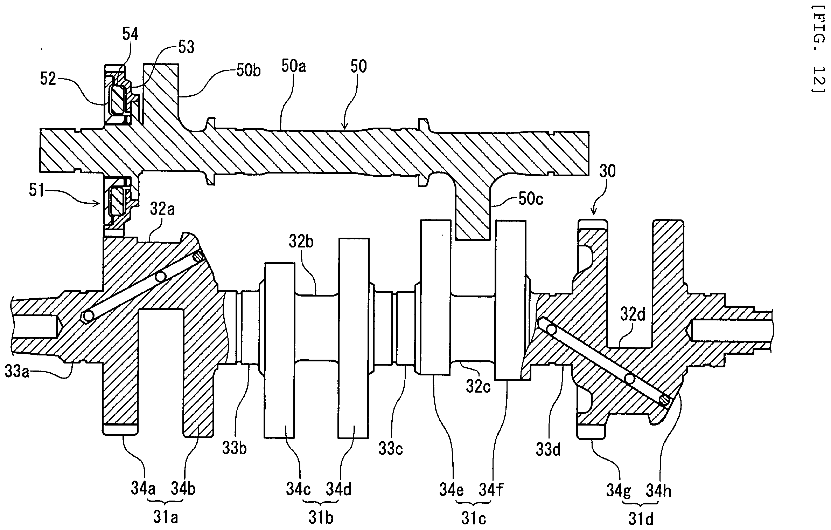

FIG. 12 is a cross-sectional view showing a portion of an engine in a modified example; and

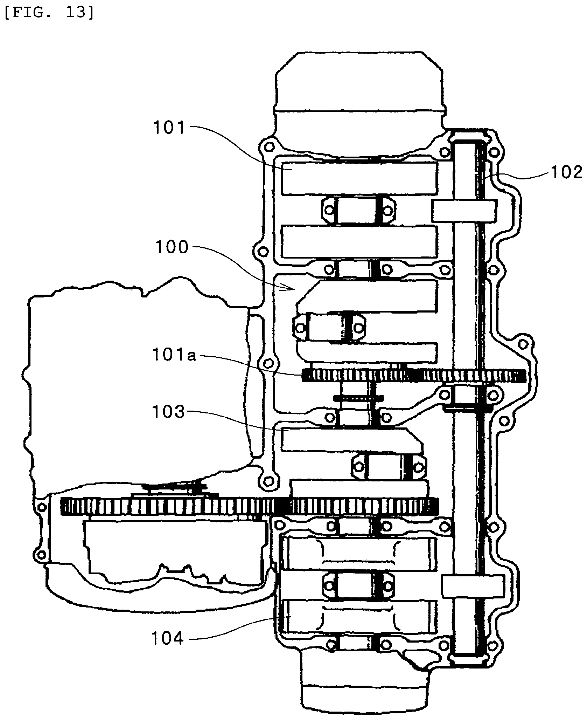

FIG. 13 is a local sectional view of an engine disclosed in Japanese Examined Patent Document No. 7-76577.

While the invention is susceptible to various modifications and alternative forms, specific embodiments are shown by way of example in the drawings and are herein described in detail. It should be understood, however, that the drawings and detailed description are not intended to limit the invention to the particular form disclosed, but on the contrary, the invention is to cover all modifications, equivalents and alternatives falling within the scope of the present invention as defined in the appended claims.

### Detailed Description

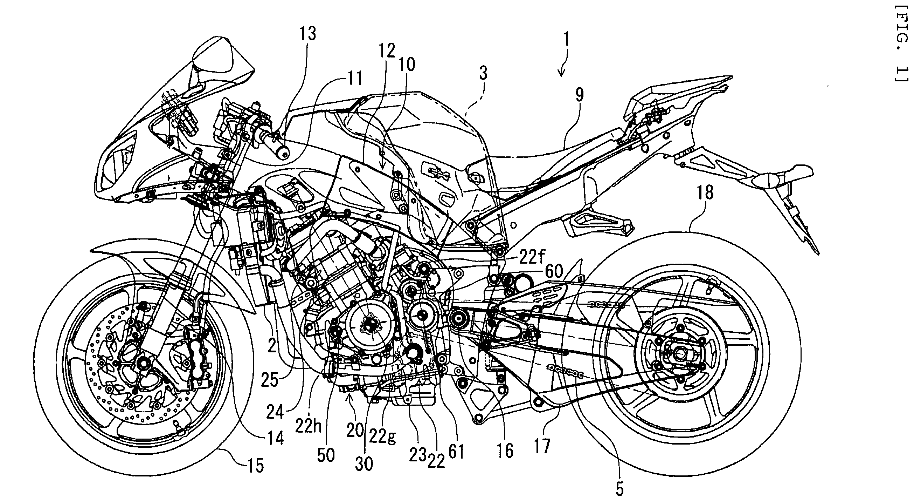

One example of an embodiment of a vehicle in which the present invention can be employed will be described hereinbelow with reference to a motorcycle 1 shown in FIG. 1. However, the vehicle according to the present invention is not limited to the motorcycle 1 shown in FIG. 1. The vehicle according to the present invention may be a four-wheel vehicle or straddle-type vehicle, for example. In the present specification, four-wheel vehicles include the side-by-side vehicle (SSV). The side-by-side vehicle is alternatively referred to as "off-road vehicle." In the present specification, the "straddle-type vehicle" refers to a vehicle of the type that a rider rides straddling on a seat thereof. The straddle-type vehicles herein includes, for example, a motorcycle, ATV (all terrain vehicle), and snowmobile. In the present embodiment, the "motorcycle" refers to a motorcycle in a broad sense. The "broad sense motorcycle," includes not only motorcycles in a narrow sense, but also moped vehicles, off-road vehicles, and motor scooters. The motorcycle herein also includes a vehicle of the type in which at least one of front and rear wheels is configured from multiple wheels, and the category of which also includes vehicles of the type that changes the travel direction by inclining the vehicle.

The general configuration of the motorcycle 1 will be described herebelow with reference to FIG. 1. In the description below, the frontward and rearward and leftward and rightward directions are defined herein to be as viewed from the rider sitting on the seat 9.

FIG. 1 is left side view of a motorcycle 1 according to a first embodiment. As shown in FIG. 1, the motorcycle 1 includes a vehicle body frame 10. The vehicle body frame 10 includes a head pipe 11 and a main frame 12. The head pipe 11 is disposed in a vehicle's front side portion. The main frame 12 extends obliquely downward and rearward from the head pipe 11.

The head pipe 11 includes a steering shaft (not shown) that is rotatably inserted therein. The steering shaft is connected to a handle bar 13 and a pair of front forks 14. A front wheel 15 is rotatably mounted in a lower end portion of the pair of front forks 14.

A pivot shaft 16 is mounted in a rear end portion of the main frame 12. A rear arm 17 is pivotably mounted to the pivot shaft 16. A rear wheel 18 is rotatably mounted in a rear end portion of the rear arm 17.

An engine 20 is suspended by the main frame 12. A radiator 2 is disposed frontward of the engine 20. The engine 20 is connected to the radiator 2.

A fuel tank 3 is disposed frontward of the seat 9. At least a portion of the fuel tank 3 is disposed above the engine 20. A lower end portion of the fuel tank 3 extends down to the main frame 12.

In the present embodiment, the engine 20 is a water-cooled parallel multi-cylinder engine. More specifically, the engine 20 is a water-cooled parallel four cylinder engine. However, in the present embodiment, the engine is not limited to the parallel four cylinder engine. In the present invention, the engine may be, for example, an engine having parallel five or more cylinders. Still alternatively, the engine 20 may be an air-cooled engine.

The engine 20 includes a crankcase 22. The crankcase 22 includes an upper casing portion 22f and a lower casing portion 22g. The upper casing portion 22f and the lower casing portion 22g are vertically abutted together.

An oil pan 23 is mounted below the crankcase 22. An oil reservoir (not shown) is formed in the oil pan 23. Lubricating oil for supply to respective slide portions of the engine 20 is stored in the oil reservoir.

FIG. 2 is a bottom view of the oil pan 23. Multiple fins 29 are formed to a bottom face of the oil pan 23. Thereby, the cooling efficiency of the oil pan 23 is improved.

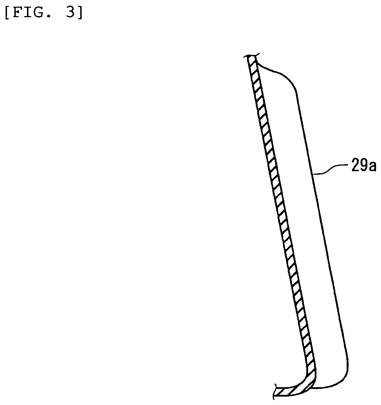

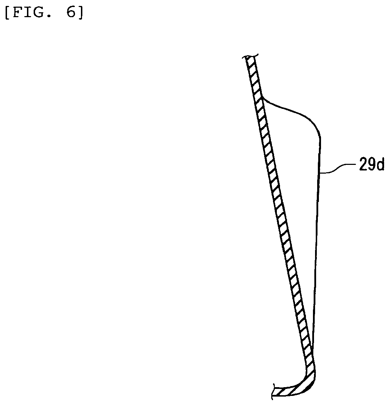

The multiple fins 29 are formed substantially parallel to each other so as to extend along the forward-rearward direction. The multiple fins 29 are formed separately on both sides of an exhaust pipe 4 disposed on the lower portion of the oil pan 23 in the vehicle width direction. In the plan view, fins 29c and 29d located in portions overlapping with the exhaust pipe 4 are formed relatively lower in height as compared with other fins 29a and 29b, as can be seen by comparing those shown in FIGS. 3 to 6. In particular, the fin 29d located inward in the vehicle width direction is formed to have a relatively lower height than that of the fin 29c. Further, in the plan view, no fins 29 are formed in a portion overlapping with a central portion of the exhaust pipe 4 of the oil pan 23. Hence, positional interference in the height direction between the fins 29 and the exhaust pipe 4 can be inhibited. Hence, the exhaust pipe 4 can be disposed in a relatively high position. Consequently, a minimum road clearance of the motorcycle 1 can be increased.

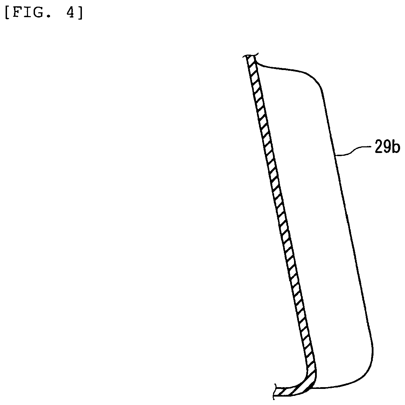

As can be seen through comparison between FIGS. 3 and 4, the fin 29a located inward in the vehicle width direction is formed to have a relatively lower height than that of the fin 29b located inward in the vehicle width direction. As a consequence, in the state where the motorcycle 1 is standing upright, the distance between a lower end of the fin 29a and the road is greater than that between a lower end of the fin 29b and the road. Hence, a bank angle of the motorcycle 1 is designed to be large.

In the present embodiment, the example in which the oil pan 23 is air-cooled has been described. However, the oil pan 23 may be water-cooled.

As shown in FIG. 1, a body cylinder 24 is mounted in a front side portion of the crankcase 22. A head cylinder 25 is mounted in an upper end section of the body cylinder 24.

As shown in FIG. 8, a crankshaft 30 is disposed inside of the crankcase 22. The crankshaft 30 extends along the vehicle width direction. More specifically, the direction of the axial line of the crankshaft 30 extends along the vehicle width direction.

As shown in FIG. 8,the crankshaft 30 includes a crankshaft body 30a and a first gear 38. The crankshaft body 30a includes a first crank web pair 31a, a second crank web pair 31b, a third crank web pair 31c, a fourth crank web pair 31d, a first crank pin 32a, a second crank pin 32b, a third crank pin 32c, a fourth crank pin 32d, a first crank journal 33a, a second crank journal 33b, a third crank journal 33c, a fourth crank journal 33d, and a fifth crank journal 33e.

The first crank web pair 31a is disposed on the leftmost side. The first crank web pair 31a includes a first crank web 34a and a second crank web 34b. The second crank web 34b is disposed on the right side with respect to the first crank web 34a in the vehicle width direction. The first crank web 34a and the second crank web 34b are interconnected by the first crank pin 32a extending along the vehicle width direction. The first crank journal 33a is disposed on the left side in the vehicle width direction of the first crank web 34a. The first crank web 34a is connected to the first crank journal 33a.

The second crank web pair 31b is disposed on the right side with respect to the first crank web pair 31a in the vehicle width direction. The second crank web pair 31b includes a third crank web 34c and a fourth crank web 34d. The third crank web 34c is disposed on the right side with respect to the second crank web 34b in the vehicle width direction. The third crank web 34c is connected to the second crank web 34b by the second crank journal 33b. The third crank web 34d is disposed on the right side with respect to the third crank web 34c in the vehicle width direction. The third crank web 34c and the third crank web 34d are interconnected by the second crank pin 32b extending along the vehicle width direction.

The third crank web pair 31c is disposed on the right side with respect to the second crank web pair 31b in the vehicle width direction. The third crank web pair 31c includes a fifth crank web 34e and a sixth crank web 34f. The fifth crank web 34e is disposed on the right side with respect to the fourth crank web 34d in the vehicle width direction. The fifth crank web 34e and the fourth crank web 34d are interconnected by the third crank journal 33c extending along the vehicle width direction. The sixth crank web 34f is disposed on the right side with respect to the fifth crank web 34e in the vehicle width direction. The sixth crank web 34f and the fifth crank web 34e are interconnected by the third crank pin 32c extending along the vehicle width direction.

The fourth crank web pair 31d is disposed on the right side with respect to the third crank web pair 31c in the vehicle width direction. The fourth crank web pair 31d is disposed on the rightmost side. The fourth crank web pair 31d includes a seventh crank web 34g and an eighth crank web 34h. The seventh crank web 34g is disposed on the right side with respect to the sixth crank web 34f in the vehicle width direction. The seventh crank web 34g and the sixth crank web 34f are interconnected by the fourth crank journal 33d extending along the vehicle width direction. The eighth crank web 34h is disposed on the right side with respect to the seventh crank web 34g in the vehicle width direction. The eighth crank web 34h and the seventh crank web 34g are interconnected by the fourth crank pin 32d extending along the vehicle width direction. The fifth crank journal 33e is disposed on the right side with respect to the eighth crank web 34h in the vehicle width direction. The eighth crank web 34h is connected to the fifth crank journal 33e.

As shown in FIG. 8, a first bearing portion 22a, a second bearing portion 22b, a third bearing portion 22c, a fourth bearing portion 22d, and a fifth bearing portion 22e are formed in the crankcase 22. The crankshaft 30 is rotatably supported by the first to fifth bearing portions 22a to 22e. More specifically, the first crank journal 33a is supported by the first bearing portion 22a. The second crank journal 33b is supported by the second bearing portion 22b. The third crank journal 33c is supported by the third bearing portion 22c. The fourth crank journal 33d is supported by the fourth bearing portion 22d. The fifth crank journal 33e is supported by the fifth bearing portion 22e.

In the present embodiment, oil supply holes (not shown) are formed in the respective bearing portions 22a to 22e. High pressure lubricating oil is supplied from an oil pump (not shown) through the respective oil supply holes. The crankshaft 30 is supported by so-called metal bearings. However, the metal bearings may be disposed between the respective bearing portions 22a to 22e and the respective crank journals 33a to 33e.

Base end portions of connecting rods 27a to 27d are connected to the respective crank pins 32a to 32d. Pistons 28a to 28d are connected to leading end portions of the respective connecting rods 27a to 27d. The pistons 28a to 28d are disposed inside of cylinders 26a to 26d formed within the body cylinder 24.

FIG. 9 is a schematic perspective view of the crankshaft 30. As shown in FIG. 9, in the present embodiment, the phases of the first crank pin 32a and the second crank pin 32b are different by 90 degrees from each other. The phases of the second crank pin 32b and the third crank pin 32c are different by 180 degrees from each other. The phases of the first crank pin 32a and the fourth crank pin 32d are different by 180 degrees from each other.

Hence, the first crank pin 32a and the fourth crank pin 32d are located on a plane P1 extending along the axial center of the crankshaft 30. The second crank pin 32b and the third crank pin 32c, on the other hand, are located on a plane P2 extending along the axial center of the crankshaft 30. The planes P1 and P2 are perpendicular to each other. Thus, the first to fourth crank pins 32a to 32d are disposed on the two planes P1 and P2 extending along the axial line of the crankshaft 30. Hence, the crankshaft 30 of the present embodiment is generally called a "two-plane type crankshaft."

As shown in FIG. 10, a first gear 38 is mounted in the crankshaft body 30a. Specifically, the first gear 38 mounted to the first crank journal 33a. More specifically, the first gear 38 is press-fitted onto the first crank journal 33a.

In the present embodiment, an example case where the first gear 38 is formed separately from the crankshaft body 30a. However, the first gear 38 may be formed integral with the crankshaft body 30a.

Further, the manner of fixing the first gear 38 to the first crank journal 33a is not specifically limited. The first gear 38 may be fixed to the first crank journal 33a in a manner other than the manner of press-fitting.

The first gear 38 is disposed further outward than the first crank web 34a in the vehicle width direction. Concurrently, the first gear 38 is disposed further inward than the first bearing portion 22a in the vehicle width direction. In an other expression, the first bearing portion 22a supports the first crank journal 33a in a position further outward than the position of the first gear 38 in the vehicle width direction.

The first gear 38 is in engagement with a balancer shaft 50 that reduces a primary force couple of the crankshaft 30. The balancer shaft 50 includes a balancer shaft body 50a, a first weight portion 50b, a second weight portion 50c, and a second gear 51.

The first weight portion 50b and the second weight portion 50c are disposed so that the phases are different by 180 degrees from each other. In the vehicle width direction, the first weight portion 50b is disposed between the first crank web 34a and the second crank web 34b. The second weight portion 50c is disposed between the fifth crank web 34e and the sixth crank web 34f. However, in the present invention, the number of weight portions provided in the balancers is not specifically limited. Further, the disposition positions of the weight portions in the vehicle width direction are not specifically limited.

The second gear 51 is mounted to the balancer shaft body 50a. As shown in FIGS. 10 and 11, the second gear 51 includes a first gear portion 52, a second gear portion 53, and multiple dampers 54. The first gear portion 52 is non-rotatably mounted to the balancer shaft body 50a. As shown in FIG. 11, the first gear portion 52 includes multiple first counter portions 52a. The multiple first counter portions 52a are disposed at substantially same intervals along the circumferential direction. The multiple first counter portions 52a extend radially outward from an axial center side of the balancer shaft body 50a.

The second gear portion 53 is disposed outside of the first gear portion 52. The second gear portion 53 is not displaceable with respect to the first gear portion 52 in the direction of the axial line of the crankshaft 30. The second gear portion 53 is not rotatable with respective to the balancer shaft body 50a. The second gear portion 53 is formed into a substantially ring shape. The second gear portion 53 includes multiple second counter portions 53a. The multiple second counter portions 53a are disposed at substantially same intervals along the circumferential direction. The multiple second counter portions 53a extend radially inward.

The multiple second counter portions 53a and the multiple first counter portions 52a are each disposed alternately along the circumferential direction. A damper 54, which is formed of rubber, is disposed between each of the first counter portions 52a and the second counter portions 53a.

The crankshaft 30 is connected to a main shaft 60 via a clutch 62.

Gears are formed on an outer peripheral surface of the second gear portion 53. The second gear portion 53 is in engagement with the first gear 38 that is press-fitted on the crankshaft 30. The speed reduction ratio between the first gear 38 and the second gear 51 is 1:1. Hence, the balancer shaft 50 rotates at a rotation speed identical to that of the crankshaft 30 along a reverse rotation direction with respect to the rotation direction of the crankshaft 30.

As shown in FIGS. 8 and 7, gears are formed on the outer circumference of the seventh crank web 34g. As shown in FIG. 7, the seventh crank web 34g is in engagement with the clutch 62.

The clutch 62 includes an inner 62a, an outer 62b, and a plate set 62c. The outer 62b is in engagement with the seventh crank web 34g. Hence, the outer 62b rotates with the seventh crank web 34g. The inner 62a is rotatable with respect to the outer 62b. The plate set 62c is disposed between the inner 62a and the outer 62b. The plate set 62c includes a first plate set, which rotates with the inner 62a, and a second plate set, which rotates with the outer 62b. When the plate set 62c is not in a press-contacted state, the inner 62a is rotatable with respect to the outer 62b. When the plate set 62c is in the press-contacted state, the inner 62a rotates with the outer 62b.

The inner 62a is connected to the main shaft 60. The main shaft 60 is disposed so as to extend along the vehicle width direction. A drive shaft 61 is disposed substantially parallel to the main shaft 60. One or more transmission gear pairs 63 are disposed between the drive shaft 61 and the main shaft 60. The rotation of the main shaft 60 is transmitted to the drive shaft 61 via the transmission gear pair 63. A drive sprocket 64 is mounted in a left end portion of the drive shaft 61. The drive sprocket 64 is connected to a driven sprocket (not shown) provided to a rear wheel 18 by a chain 5, which is shown in FIG. 1. Thereby, the rotation of the drive shaft 61 is transmitted to the rear wheel 18.

As shown in FIG. 1, in the present embodiment, the balancer shaft 50, the crankshaft 30, the drive shaft 61, the axial center of the balancer shaft 50, the axial center of the crankshaft 30, and the axial center of the drive shaft 61 are disposed to be positioned along substantially the same straight line in the side view. More specifically, in the present embodiment, the balancer shaft 50, the crankshaft 30, and the drive shaft 61 are disposed on a mating surface 22h between the upper casing portion 22f and the lower casing portion 22g. The main shaft 60 is disposed so that the axial center of the main shaft 60 is located at a position higher than the mating surface 22h. In the present embodiment, the crankshaft 30, the main shaft 60, and the drive shaft 61 are not disposed along the same straight line in the side view. Hence, the distance between the crankshaft 30 and the drive shaft 61 is short. As a consequence, the length of a rear arm 17 can be increased. Hence, the performance of motion of the motorcycle 1 can be improved.

As described above, when the disposition balance of an inertia mass in the crankshaft is taken into account, it is preferable the inertia mass is concentrated on the vicinity of the center of the crankshaft in view of reduction of a force that is exerted on the crankshaft due to torsional resonance of the crankshaft. Hence, conventionally, there have been many cases where a gear for engagement with a balancer shaft is disposed in a vicinity of the substantially center of the crankshaft.

However, as a result of extensive study, the inventor of the present invention discovered that the force exerted on the crankshaft due to the torsional resonance of the crankshaft can be further reduced in the case where the gear for engagement with the balancer shaft is disposed further outward than the crank web disposed outward in the vehicle width direction rather than in the case where the gear for engagement with the balancer shaft is disposed substantially in the vicinity of the center of the crankshaft. As a consequence, the inventor of the present invention determined to form the configuration of the present embodiment in which the gear for engagement with the balancer shaft is disposed further outward than the crank web disposed outward in the vehicle width direction.

In the case where the gear for engagement with the balancer shaft is disposed substantially in the vicinity of the center of the crankshaft, the length of the crankshaft in the axial line direction thereof tends to be increased. More specifically, in the case where the gear for engagement with the balancer shaft is disposed substantially in the vicinity of the center of the crankshaft, a certain distance between the gear and the crank web has to be secured from the viewpoint of manufacture. This is because gear processing is difficult when the distance between the gear and the crank web is small. Hence, in the event of disposing the gear substantially in the vicinity of the center of the crankshaft, the distance between the crank web and the gear is increased in comparison with the case where the gear is disposed further outward than the first crank web. Consequently, in the case where the gear for engagement with the balancer shaft is disposed in the vicinity of the substantially center of the crankshaft, the length of the crankshaft in the direction of the axial line thereof tends to be increased.

In the case where the length of the crankshaft in the direction of the axial line thereof is increased, the weight of the crankshaft tends to be increased thereby. In the case where the weight of the crankshaft is increased, the torsional resonance point of the crankshaft is shifted to a low frequency side. As a consequence, a force in a torsional direction exerted on the crankshaft is increased at a specific rotation speed of the crankshaft. This makes it difficult to secure reliability of the crankshaft. Hence, there arises the necessity of increasing the diameter of the crankshaft in order to secure the reliability of the crankshaft. As a consequence, the weight of the crankshaft is further increased. Hence, the torsional resonance point of the crankshaft is further shifted to the low frequency side.

Hence, in the case where the gear for engagement with the balancer shaft is disposed substantially in the vicinity of the center of the crankshaft, it is difficult to implement a weight reduction while securing high reliability in an engine including the two-plane type crankshaft.

However, in the present embodiment, the first gear 38 is provided further outward than the first crank web 34a in the vehicle width direction. As such, the length of the crankshaft 30 in the axial line direction thereof can be shortened. Hence, the weight of the crankshaft 30 can be reduced. Accordingly, the torsional resonance point of the crankshaft 30 can be shifted to a high frequency side. As a consequence, the force in the torsional direction being exerted on the crankshaft 30 at the specific rotation speed can be reduced. Therefore, the weight reduction of the crankshaft 30 can be implemented while the high reliability of the crankshaft 30 is secured.

It can be considered that the gear for engagement with the balancer shaft is formed on the outer circumferential surface of any one of the second to seventh crank webs. In such a case, the length of the crankshaft 30 in the axial line direction thereof can be reduced since the gear does not have to be disposed separately.

In this case, however, the crank web in which a gear is formed cannot be caused to function as a balancer weight for cancelling, for example, the primary and the secondary inertia forces and the secondary force couple. Hence, cancellation of, for example, for example, the primary and the secondary inertia forces and the secondary force couple becomes difficult.

Further, the crank web in which a gear is formed has to be formed substantially circular in the side view. Hence, the weight of the crank web in which a gear is formed is increased greater than the weight of the crank web without gear formed thereon.

Further, in the case where a gear is formed on the crank web, the tooth-root diameter of the gear has to be relatively grater. This is because positional interference between the crank pin and the gear has to be regulated. Hence, the diameter of the gear tends to be increased. Consequently, the weight of the crank web in which a gear is formed tends to be increased.

Further, there arises the necessity of increasing the weights of other crank webs in order to cancel, for example, the primary and the secondary inertia forces and the secondary force couple. Consequently, the weight of the crankshaft also tends to be increased.

Further, since the diameter of the gear is increased, the distance between the crankshaft and the balancer shaft is increased to be relatively longer. As a consequence, it is difficult to implement miniaturization of the engine. However, in the present embodiment, the diameter of the first gear 38 can be reduced to be relatively small. Hence, miniaturization of the engine 20 can be implemented.

In the case where the gear for engagement with the balancer shaft is disposed substantially in the vicinity of the center of the crankshaft, processing of the gear is relatively difficult. However, in the present embodiment, the first gear 38 is formed separately from the crankshaft body 30a. Hence, processing of the first gear 38 is significantly easy. Especially, in the present embodiment, the first gear 38 is press-fitted onto the crankshaft body 30a. Hence, manufacture of the crankshaft 30 is significantly easy.

In the present embodiment, the first gear 38 is disposed between the first bearing portion 22a and the second bearing portion 22b in the vehicle width direction. In an other expression, the crankshaft 30 is supported by the crankcase 22 on both sides of the first gear 38 in the vehicle width direction. Hence, as compared with the case where the first gear 38 is disposed outward of the first bearing portion 22a, the size of the engine 20 in the vehicle width direction can be reduced. The rotation of the crankshaft 30 can be even more stabilized.

From the viewpoint of reduction of the respective size of the first and the second weight portions 50b, it is preferable that the first and the second weight portions are disposed outward as much as possible in the vehicle width direction. More specifically, it is preferable that, in the vehicle width direction, the first weight portion is disposed between the first and the second crank webs, and the second weight portion is disposed between the seventh and the eighth crank webs.

Further, from the viewpoint of causing stable rotation of the balancer shaft, it is preferable that the balancer shaft is supported by the crankcase at both the left side of the first weight portion and the right side of the second weight portion.

However, in the case where the second weight portion is disposed between the seventh and the eighth crank webs in vehicle width direction, a right front side portion of the engine is protruded when a bearing portion for the balancer shaft is provided on the further right side than the second weight portion. As a consequence, the size of the engine tends to be increased.

However, in the present embodiment, the second weight portion 50c is disposed between the fifth crank web 34e and the sixth crank web 34f in the vehicle width direction. Hence, as shown in FIG. 10, a bearing portion 22j for supporting the balancer shaft 50 in the right side of the second weight portion 50c can be disposed relatively inward in the vehicle width direction. More specifically, the bearing portion 22j can be disposed further inward than the seventh crank web 34g in the vehicle width direction. Hence, the engine 20 can be inhibited from protruding to the right front side. As a consequence, the engine 20 can be miniaturized.

In the present embodiment, the damper 54 is disposed within the second gear 51. Hence, the stress between the crankshaft 30 and the balancer shaft 50 can be reduced. Hence, the force exerted on the crankshaft 30 can be further reduced.

In the embodiment described above, the example in which the first gear 38 is formed separately from the crankshaft body 30a. However, as shown in FIG. 12, the gear for engagement with the balancer shaft 50 may be formed on the outer circumferential surface of any one of the first crank web 34a and the eighth crank web 34h.

Even in this case, the high reliability is secured, and concurrently, the weight reduction can be implemented in the engine 20 including the two-plane type crankshaft 30.

In the present embodiment, since the first gear 38 does not have to be provided as a separate body, the crankshaft 30 can be even more shortened. Hence, the weight of the crankshaft 30 can be even more reduced in weight.

Therefore, from one aspect there has now been described that to implement a weight reduction while securing high reliability in an engine including a two-plane type crankshaft, an engine can includes a two-plane type crankshaft and a balancer shaft for reducing a primary force couple. The crankshaft includes a crankshaft body and a first gear. The first gear is disposed closer to one end side than a first crank web pair disposed closest to the one end side in an direction of the axial line of the crankshaft.

### Description of Reference Numerals

- 1: motorcycle (vehicle)
- 20: engine
- 22: crankcase
- 22a: first bearing portion
- 22b: second bearing portion
- 30: crankshaft
- 30a: crankshaft body
- 31a: first crank web pair
- 31b: second crank web pair
- 31c: third crank web pair
- 31d: fourth crank web pair
- 32a: first crank pin
- 32b: second crank pin
- 32c: third crank pin
- 32d: fourth crank pin
- 33a: first crank journal (crank journal)
- 33b: second crank journal
- 34a: first crank web (outer crank web)
- 34b: second crank web
- 34c: third crank web
- 34d: fourth crank web
- 34e: fifth crank web
- 34f: sixth crank web
- 34g: seventh crank web
- 34h: eighth crank web
- 38: first gear
- 50: balancer shaft
- 50a: balancer shaft body
- 50b: first weight portion
- 50c: second weight portion 50c
- 51: second gear (gear)
- 52: first gear portion
- 52a: first counter portion
- 53: second gear portion
- 53a: second counter portion
- 54: Damper

## Claims

1. A crankshaft (30) for an engine (20), comprising:
first, second, third, and fourth crank web pairs (31a-31d) that each include a pair of crank webs (34a-34h) and that are sequentially disposed from one end side to the other end side,
a first crank pin (32a) that interconnects between the pair of crank webs (34a-34b) of the first crank web pair (31a),
a second crank pin (32b) that interconnects between the pair of crank webs (34c-34d) of the second crank web pair (31b) and that is different in phase by 90 degrees from the first crank pin (32a),
a third crank pin (32c) that interconnects between the pair of crank webs (34e-34f) of the third crank web pair (31c) and that is different in phase by 180 degrees from the second crank pin (32b),
a fourth crank pin (32d) that interconnects between the pair of crank webs (34g-34h) of the fourth crank web pair (31d) and that is different in phase by 180 degrees from the first crank pin (32a),
a first gear (38) formed to an outer crank web (34a) of the pair of crank webs (34a-34b) of the first crank web pair (31a), the outer crank web (34a) being located on one end side in a direction of the axial line of the crankshaft (30), and the first gear (38) configured to engage with a second gear (51) of a balancer shaft (50) that reduces a primary force couple of the crankshaft (30),
**characterized in that** it comprises a further gear formed on an outer circumference of the inner crank web (34g) of the fourth crank web pair the further gear configured to engage with a clutch (62) for connecting the crankshaft (30) to a main shaft (60) of the engine (20).

2. An engine (20) comprising:
a crankshaft (30) according to claim 1; and
a balancer shaft (50) that includes the second gear (51) for engagement with the first gear and that reduces a primary force couple of the crankshaft (30).

3. The engine (20) according to claim 2, wherein the first gear (38) is formed separately from a crankshaft body (30a) of the crankshaft (30).

4. The engine (20) according to claim 3, wherein
the crankshaft body (30a) further includes a crank journal (33a) extending from the first crank web pair (31a) to the one end side in the direction of the axial line of the crankshaft (30), and
the first gear (38) is press-fit onto the crank journal (33a).

5. The engine (20) according to claim 3 or 4, further comprising a crankcase (22) that stores therein the crankshaft (30), wherein
the crankshaft body (30a) further includes:
a first crank journal (33a) that extends from the first crank web pair (31a) to the one end side in the direction of the axial line of the crankshaft (30) and that includes the first gear (38) mounted thereto; and
a second crank journal (33b) that interconnects between the first crank web pair (31a) and the second crank web pair (31b), and
the crankcase (22) includes:
a first bearing portion (22a) that supports the first crank journal (33a); and
a second bearing portion (22b) that supports the second crank journal (33b).

6. The engine (20) according to any one of claims 2 to 5, wherein the balancer shaft (50) further includes:
a balancer shaft body (50a) including the second gear (51) mounted thereto;
a first weight portion (50b) that rotates with the balancer shaft body (50a); and
a second weight portion (50c) that rotates with the balancer shaft body (50a) and that is different in phase by 180 degrees from the first weight portion (50b),
wherein the first weight portion (50b) is disposed between the pair of crank webs (34a-34b) of the first crank web pair (31a) in the direction of the axial line of the crankshaft (30), and the second weight portion (50c) is disposed between the pair of crank webs (34e-34f) of the third crank web pair (31c) in the direction of the axial line of the crankshaft (30).

7. The engine (20) according to any one of claims 2 to 5, wherein
the balancer shaft (50) further includes a balancer shaft body (50a) including the second gear (51) mounted thereto, and
the second gear (51) includes:
a first gear portion (52) that is provided non-rotatably with respective to the balancer shaft body (50a) and that includes a first counter portion (52a);
a second gear portion (53) that is provided non-rotatably with respective to the balancer shaft body (50a) and that includes a second counter portion (53a) opposing the first counter portion (52a) in a rotation direction of the balancer shaft (50); and
a damper (54) disposed between the first counter portion (52a) and the second counter portion (53a).

8. A vehicle (1) comprising the engine (20) according to any one of claims 1 to 7.

## Patentansprüche

1. Eine Kurbelwelle (30) für einen Motor (20), die folgende Merkmale aufweist:
ein erstes, zweites, drittes und viertes Kurbelwangenpaar (31a-31d), die jeweils ein Paar von Kurbelwangen (34a-34h) umfassen und die aufeinanderfolgend von einer Endseite zu der anderen Endseite angeordnet sind,
einen ersten Kurbelzapfen (32a), der zwischen dem Paar von Kurbelwangen (34a-34b) des ersten Kurbelwangenpaars (31a) dieselben miteinander verbindet,
einen zweiten Kurbelzapfen (32b), der zwischen dem Paar von Kurbelwangen (34c-34d) des zweiten Kurbelwangenpaars (31b) dieselben miteinander verbindet und der zu dem ersten Kurbelwangenzapfen (32a) um 90 Grad phasenverschoben ist,
einen dritten Kurbelzapfen (32c), der zwischen dem Paar von Kurbelwangen (34e-34f) des dritten Kurbelwangenpaars (31c) dieselben miteinander verbindet und der zu dem zweiten Kurbelwangenzapfen (32b) um 180 Grad phasenverschoben ist,
einen vierten Kurbelzapfen (32d), der zwischen dem Paar von Kurbelwangen (34g-34h) des vierten Kurbelwangenpaars (31d) dieselben miteinander verbindet und der zu dem ersten Kurbelwangenzapfen (32a) um 180 Grad phasenverschoben ist,
ein erstes Getrieberad (38), das an einer äußeren Kurbelwange (34a) des Paars von Kurbelwangen (34a-34b) des ersten Kurbelwangenpaars (31a) gebildet ist, wobei sich die äußere Kurbelwange (34a) auf einer Endseite in einer Richtung der Axiallinie der Kurbelwelle (30) befindet und das erste Getrieberad (38) dazu ausgebildet ist, ein zweites Getrieberad (51) einer Ausgleichswelle (50), die ein primäres Kräftepaar der Kurbelwelle (30) reduziert, in Eingriff zu nehmen,
**dadurch gekennzeichnet, dass** dasselbe ein weiteres Getrieberad aufweist, das an einem Außenumfang der inneren Kurbelwange (34g) des vierten Kurbelwangenpaars gebildet ist, wobei das weitere Getrieberad dazu ausgebildet ist, eine Kupplung (62) zum Verbinden der Kurbelwelle (30) mit einer Hauptwelle (60) des Motors (20) in Eingriff zu nehmen.

2. Ein Motor (20), der folgende Merkmale aufweist:
eine Kurbelwelle (30) gemäß Anspruch 1; und
eine Ausgleichswelle (50), die das zweite Getrieberad (51) für eine Eingriffnahme mit dem ersten Getrieberad umfasst und die ein primäres Kräftepaar der Kurbelwelle (30) reduziert.

3. Der Motor (20) gemäß Anspruch 2, bei dem das erste Getrieberad (38) getrennt von einem Kurbelwellenkörper (30a) der Kurbelwelle (30) gebildet ist.

4. Der Motor (20) gemäß Anspruch 3, bei dem
der Kurbelwellenkörper (30a) ferner einen Kurbelwellenzapfen (33a) umfasst, der sich von dem ersten Kurbelwangenpaar (31a) zu der einen Endseite in der Richtung der Axiallinie der Kurbelwelle (30) erstreckt, und
das erste Getrieberad (38) auf den Kurbelwellenzapfen (33a) pressgepasst ist.

5. Der Motor (20) gemäß Anspruch 3 oder 4, der ferner ein Kurbelgehäuse (22) aufweist, in dem die Kurbelwelle (30) gelagert ist, wobei
der Kurbelwellenkörper (30a) ferner folgende Merkmale umfasst:
einen ersten Kurbelwellenzapfen (33a), der sich von dem ersten Kurbelwangenpaar (31a) zu der einen Endseite in der Richtung der Axiallinie der Kurbelwelle (30) erstreckt und der das an demselben befestigte erste Getrieberad (38) umfasst; und
einen zweiten Kurbelwellenzapfen (33b), der zwischen dem ersten Kurbelwangenpaar (31a) und dem zweiten Kurbelwangenpaar (31b) verbindet, und
das Kurbelgehäuse (22) folgende Merkmale umfasst:
einen ersten Lagerabschnitt (22a), der den ersten Kurbelwellenzapfen (33a) trägt; und
einen zweiten Lagerabschnitt (22b), der den zweiten Kurbelwellenzapfen (33b) trägt.

6. Der Motor (20) gemäß einem der Ansprüche 2 bis 5, bei dem die Ausgleichswelle (50) ferner folgende Merkmale umfasst:
einen Ausgleichswellenkörper (50a), der das an demselben befestigte zweite Getrieberad (51) umfasst;
einen ersten Gewichtsabschnitt (50b), der sich mit dem Ausgleichswellenkörper (50a) dreht; und
einen zweiten Gewichtsabschnitt (50c), der sich mit dem Ausgleichswellenkörper (50a) dreht und der zu dem ersten Gewichtsabschnitt (50b) um 180 Grad phasenverschoben ist,
wobei der erste Gewichtsabschnitt (50b) zwischen dem Paar von Kurbelwangen (34a-34b) des ersten Kurbelwangenpaars (31a) in der Richtung der Axiallinie der Kurbelwelle (30) angeordnet ist und der zweite Gewichtsabschnitt (50c) zwischen dem Paar von Kurbelwangen (34e-34f) des dritten Kurbelwangenpaars (31c) in der Richtung der Axiallinie der Kurbelwelle (30) angeordnet ist.

7. Der Motor (20) gemäß einem der Ansprüche 2 bis 5, bei dem
die Ausgleichswelle (50) ferner einen Ausgleichswellenkörper (50a) umfasst, der das an demselben befestigte zweite Getrieberad (51) umfasst, und
das zweite Getrieberad (51) folgende Merkmale umfasst:
einen ersten Getrieberadabschnitt (52), der in Bezug auf den Ausgleichswellenkörper (50a) nicht drehbar vorgesehen ist und der einen ersten Gegenabschnitt (52a) umfasst;
einen zweiten Getrieberadabschnitt (53), der in Bezug auf den Ausgleichswellenkörper (50a) nicht drehbar vorgesehen ist und der einen zweiten Gegenabschnitt (53a) umfasst, der dem ersten Gegenabschnitt (52a) in einer Drehrichtung der Ausgleichswelle (50) gegenüberliegt; und
einen Dämpfer (54), der zwischen dem ersten Gegenabschnitt (52a) und dem zweiten Gegenabschnitt (53a) angeordnet ist.

8. Ein Fahrzeug (1), das den Motor (20) gemäß einem der Ansprüche 1 bis 7 aufweist.

## Revendications

1. Vilebrequin (30) pour un moteur (20), comprenant:
des première, deuxième, troisième et quatrième paires de bras de manivelle (31a à 31d) comportant, chacune, une paire de bras de manivelle (34a à 34h) et qui sont disposées en séquence d'un côté d'extrémité à l'autre côté d'extrémité,
un premier maneton (32a) qui connecte entre eux la paire de bras de manivelle (34a à 34b) de la première paire de bras de manivelle (31a),
un deuxième maneton (32b) qui connecte entre eux la paire de bras de manivelle (34c à 34d) de la deuxième paire de bras de manivelle (31b) et qui est différent en phase de 90 degrés du premier maneton (32a),
un troisième maneton (32c) qui connecte entre eux la paire de bras de manivelle (34e à 34f) de la troisième paire de bras de manivelle (31c) et qui est différent en phase de 180 degrés du deuxième maneton (32b),
un quatrième maneton (32d) qui connecte entre eux la paire de bras de manivelle (34g à 34h) de la quatrième paire de bras de manivelle (31d) qui est différent en phase de 180 degrés du premier maneton (32a),
un premier engrenage (38) formé sur un bras de manivelle extérieur (34a) de la paire de bras de manivelle (34a à 34b) de la première paire de bras de manivelle (31a), le bras de manivelle extérieur (34a) étant situé d'un côté d'extrémité dans une direction de la ligne axiale du vilebrequin (30), et le premier engrenage (38) étant configuré pour venir en prise avec un deuxième engrenage (51) d'un arbre d'équilibrage (50) qui réduit un couple de force primaire du vilebrequin (30),
**caractérisé par le fait qu'**il comprend
un autre engrenage formé sur une circonférence extérieure du bras de manivelle intérieur (34g) de la quatrième paire de bras de manivelle, l'autre engrenage étant configuré pour venir en prise avec un embrayage (62) pour connecter le vilebrequin (30) à un arbre principal (60) du moteur (20).

2. Moteur (20) comprenant:
un vilebrequin (30) selon la revendication 1; et
un arbre d'équilibrage (50) qui comporte le deuxième engrenage (51) destiné à venir en prise avec le premier engrenage et qui réduit un couple de force primaire du vilebrequin (30).

3. Moteur (20) selon la revendication 2, dans lequel le premier engrenage (38) est formé de manière séparée d'un corps de vilebrequin (30a) du vilebrequin (30).

4. Moteur (20) selon la revendication 3, dans lequel
le corps de vilebrequin (30a) comporte par ailleurs un tourillon de vilebrequin (33a) s'étendant de la première paire de bras de vilebrequin (31a) à l'un côté d'extrémité dans la direction de la ligne axiale du vilebrequin (30), et
le premier engrenage (38) est monté en ajustement serré sur le tourillon (33a).

5. Moteur (20) selon la revendication 3 ou 4, comprenant par ailleurs un carter moteur (22) dans lequel est logé le vilebrequin (30), dans lequel
le corps de vilebrequin (30a) comporte par ailleurs:
un premier tourillon de manivelle (33a) qui s'étend de la première paire de bras de manivelle (31a) à l'un côté d'extrémité dans la direction de la ligne axiale du vilebrequin (30) et qui comporte le premier engrenage (38) monté sur ce dernier; et
un deuxième tourillon de manivelle (33b) qui connecte entre elles la première paire de bras de manivelle (31a) et la deuxième paire de bras de manivelle (31b), et
le carter moteur (22) comporte:
une première partie d'appui (22a) qui supporte le premier tourillon à manivelle (33a); et
une deuxième partie d'appui (22b) qui supporte le deuxième tourillon de manivelle (33b).

6. Moteur (20) selon l'une quelconque des revendications 2 à 5, dans lequel l'arbre d'équilibrage (50) comporte par ailleurs:
un corps d'arbre d'équilibrage (50a) comportant le deuxième engrenage (51) monté sur ce dernier;
une première partie de poids (50b) qui tourne avec le corps d'arbre d'équilibrage (50a); et
une deuxième partie de poids (50c) qui tourne avec le corps d'arbre d'équilibrage (50a) et qui est différente en phase de 180 degrés de la première partie de poids (50b),
dans lequel la première partie de poids (50b) est disposée entre la paire de bras de vilebrequin (34a à 34b) de la première paire de bras de vilebrequin (31a) dans la direction de la ligne axiale du vilebrequin (30), et la deuxième partie de poids (50c) est disposée entre la paire de bras de vilebrequin (34e à 34f) de la troisième paire de bras de vilebrequin (31c) dans la direction de la ligne axiale du vilebrequin (30).

7. Moteur (20) selon l'une quelconque des revendications 2 à 5, dans lequel
l'arbre d'équilibrage (50) comporte par ailleurs un corps d'arbre d'équilibrage (50a) comportant le deuxième engrenage (51) monté sur ce dernier, et
le deuxième engrenage (51) comporte:
une première partie d'engrenage (52) qui est prévue de manière non rotative par rapport au corps d'arbre d'équilibrage respectif (50a) et qui comporte une première contrepartie (52a);
une deuxième partie d'engrenage (53) qui est prévue de manière non rotative par rapport au corps d'arbre d'équilibrage respectif (50a) et qui comporte une deuxième contrepartie (53a) opposée à la première contrepartie (52a) dans un sens de rotation de l'arbre d'équilibrage (50); et
un amortisseur (54) disposé entre la première contrepartie (52a) et la deuxième contrepartie (53a).

8. Véhicule (1) comprenant le moteur (20) selon l'une quelconque des revendications 1 à 7.
